# EUROPEAN PATENT APPLICATION

(11) **EP 4 657 798 A1**
(43) Date of publication of application: **03.12.2025**
(21) Application number: 25174795.2
(22) Date of filing: 07.05.2025
(51) Int. Cl.: H04L 9/40, H04W 4/02, H04W 12/069, H04W 12/104

(54) **METHOD AND APPARATUS FOR PROVIDING TRUST IN DATA SENT THROUGH A NETWORK TO A TARGET SERVICE**

(30) Priority: 30.05.2024 FI 20245692
(71) Applicant: Nokia Solutions and Networks Oy, 02610 Espoo (FI)
(72) Inventor: THEETEN, Bart, Sinaai (BE); HOSTE, Lode, Hove (BE)
(74) Representative: Novagraaf Technologies

(57) **Abstract**

Methods and apparatus are disclosed for providing trust in data sent by a device to a target service through a network, via a single-hop communication to an access point of the network. The device sends a message to the access point comprising at least first information which include the data. The access point generates a certificate comprising at least second information representative of the message and third information representative of a location of the access point, routes the message to the target service, and makes the certificate available in such a way that the target service receiving the message can authenticate the location of the access point which has routed the message, based on the certificate. The message can be unencrypted or encrypted. The certificate can be made available by attaching the certificate to the message being sent to the target service, or by returning the certificate to the device for the device to make it available to the target service, or by storing the certificate in a first secure data repository.

## Description

### TECHNICAL FIELD

Various example embodiments relate generally to apparatus and methods for providing trust in data sent by a device through a network to a target service.

### BACKGROUND

Lack of trust is becoming an ever more important issue in today's largely digitalized world of e-commerce, e-money, e-content, etc. Every day brings new cases of cyber-attacks, phishing campaigns, fraudulent websites, fake news, etc. These attacks have been made possible through technology, and now it is time for technology to counter these issues.

Web3 which is based on blockchains has been invented to establish trust among untrusted parties, but this only works if the data is all digital, as for example, with bitcoins. Many realistic use cases however (such as trading physical goods) require bridging the digital and physical worlds. Without fool-proof solutions to digitalize aspects of physical things, even Web3 systems are vulnerable or limited in the use cases they can serve, without relaxing trust assumptions.

There is a need to bridge physical things with the digital world in a tamper-proof manner.

### SUMMARY

According to some aspects, there is provided the subject matter of the independent claims. Some further aspects are defined in the dependent claims.

According to a first aspect, a first method of providing trust in data sent by a device through a network to a target service is disclosed for use in an access point of the network. The method comprises at the access point: receiving from the device, through a single hop communication, a message comprising at least first information which include the data, generating a certificate comprising at least second information representative of the message and third information representative of a location of the access point, making the certificate available in such a way that the target service receiving the message can authenticate the location of the access point which has routed the message, based on the certificate, and routing the message to the target service.

In an embodiment of the first method, the message is unencrypted and further comprises a device signature over the first information signed with a private key of a cryptographic private-public keypair of the device, and the second information comprises the device signature over the first information.

In an embodiment, the message further comprises the public key of the cryptographic private-public keypair of the device.

In an embodiment of the first method, the certificate is made available by attaching the certificate to the message being sent to the target service, or by returning the certificate to the device for the device to make it available to the target service, or by storing the certificate in a first secure data repository.

In an embodiment of the first method, the message is encrypted and sent over the network in a plurality of packets each packet comprising a payload. In this case, the first method comprises: selecting a first and a second bit segments in one or more payloads, wherein the first and second bit segments of the payloads have a predefined relative position, hashing the second bit segments to obtain hashes, and applying an access point signature over the hashes signed with a private key of the cryptographic private-public keypair of the access point, storing the certificate in a first secure data repository, the second information of the certificate comprising the first bit segments and the signed hashes.

According to a second aspect, a second method of providing trust in data sent by a device through a network to a target service is disclosed for use in a device which is the source of the data. The second method comprises receiving from the target service a request for a permission to resolve a location of the access point, sending the permission to the target service, and sending to an access point of the network, through a single hop communication, a message comprising at least first information which include the data.

In an embodiment of the second method, the permission comprises an indication of a granularity at which resolution is permitted.

In an embodiment of the second method, the message is sent unencrypted and further comprises a device signature over the first information signed with a private key of a cryptographic private-public keypair of the device.

In an embodiment of the second method, the message further comprises the public key of the cryptographic private-public keypair of the device.

In an embodiment, the second method further comprises: receiving from the access point a certificate comprising at least second information which include the device signature over the first information and third information representative of a location of the access point, and sending the certificate to the target service to enable authentication by the target service of the location of the access point which has routed the message.

In an alternative embodiment, the second method comprises receiving from the access point a certificate comprising at least second information which include the device signature over the first information, and third information representative of a location of the access point, generating based on the certificate a verifiable presentation comprising a zero-knowledge proof relating to the location of the access point, updating the certificate with the verifiable presentation, and sending the updated certificate to the target service to enable authentication by the target service of the location of the access point which has routed the message.

According to a third aspect, a third method is disclosed of providing trust in data sent by a device through a network to a target service, for use at a target service. The third method comprises: receiving a message which was routed through an access point of the network, and which comprises at least first information which includes the data, obtaining a certificate comprising at least second information representative of the message and third information representative of a location of the access point, authenticating the location of the access point which has routed the message based on the certificate.

In an embodiment of the third method, authenticating the location of the access point comprises: retrieving fourth information representative of the location of the access point, or verifying or proving to a third party that a claim relating to the location of the access point is true, and checking that the certificate relates to the received message and originates from the access point.

In an embodiment of the third method, retrieving the fourth information comprises: sending a location resolution request comprising at least the third information to a location service configured to resolve the location of the access point, and receiving the fourth information in response.

In an embodiment, the third method comprises sending to the device a request for a permission to resolve the location of the access point, the permission comprising an indication of a granularity at which resolution is permitted, wherein the location resolution request comprises the granularity, and the fourth information is function of the granularity.

In an embodiment, the third information is encrypted with a public key of the location service.

In an embodiment, the certificate comprises a public key of a cryptographic private-public keypair of the access point, and the third method further comprises retrieving a link to the location service from a second secure data repository, based on the public key of a cryptographic private-public keypair of the access point.

In an embodiment the message is unencrypted and it comprises a device signature over the first information signed with a private key of a cryptographic private-public keypair of the device (and optionally the public key of the cryptographic private-public keypair of the device. The second information comprises the device signature over the first information. And the certificate comprises an access point signature over the second and third information signed with a private key of the cryptographic private-public keypair of the access point, and the public key of a cryptographic private-public keypair of the access point. In this embodiment, the third method comprises: checking that the certificate relates to the received message comprises comparing the device signature over the first information contained in the received message with the second information, and checking that the certificate originates from the access point comprises verifying the access point signature contained in the certificate.

In another embodiment, the message is encrypted and sent over the network in a plurality of packets each packet comprising a payload which includes a first and a second bit segments with a predefined relative position. The second information comprises the first bit segments of one or more payloads and an access point signature, over access point hashes of the second bit segments of said payloads, signed with a private key of the cryptographic private-public keypair of the access point. And the certificate comprises the public key of the cryptographic private-public keypair of the access point. In this embodiment, the step of checking that the certificate relates to the received message and originates from the access point comprises: receiving the encrypted message, retrieving the certificate from a first secure data repository, identifying in the received encrypted message the one or more first segments contained in the second information, retrieving from the encrypted message the second segments associated with the identified first segments, based on the predefined relative position, hashing the retrieved second segments, verifying the access point signature with the public key of the cryptographic private-public keypair of the access point based on the hashes of the retrieved second segments.

In another embodiment, the message is encrypted and sent over the network in a plurality of packets each packet comprising a payload which includes a first and a second bit segments with a predefined relative position. The second information comprises the first bit segments of one or more payloads and an access point signature, over access point hashes of the second bit segments of said payloads, signed with a private key of the cryptographic private-public keypair of the access point. And the certificate further comprises the public key of the cryptographic private-public keypair of the access point. In this embodiment, the step of proving to a third party that a claim relating to the location of the access point is true comprises: receiving the encrypted message, retrieving the data from the encrypted message, retrieving the certificate from a first secure data repository, re-encrypting the retrieved data, identifying in the re-encrypted data the one or more first segments contained in the second information, retrieving from the re-encrypted data the second segments associated with the identified first segments, based on the predefined relative position, hashing the retrieved second segments, generating and sending to the third party a zero-knowledge proof of a verification of the access point signature on the hashes of the second segments retrieved from the re-encrypted data, based on the data and the hashes of the second segments retrieved from the re-encrypted data.

In an embodiment, the third information comprises at least an access point identifier uniquely representing the location of the access point.

In an embodiment, the message further comprises the public key of the cryptographic private-public keypair of the device.

According to a fourth aspect, an apparatus comprising means configured to perform any of the first, second or third methods as disclosed above.

For example, the apparatus comprises at least one processor and at least one memory storing instructions that, when executed by the at least one processor, cause the apparatus at least to perform any of the first, second or third methods as disclosed above.

According to a fifth aspect, a computer program comprising instructions which when executed by an apparatus cause the apparatus at least to perform apparatus at least to perform any of the first, second or third methods as disclosed above.

According to a sixth aspect, a non-transitory storage medium is also disclosed storing instructions which when executed by an apparatus cause the apparatus to perform any of the first, second or third methods as disclosed above.

The disclosure recognizes that location is one of the most important aspects that can increase the level of trust in many use cases, alone or combined with time: a physical thing can only be at a single place at any given time. Having a fool-proof mechanism to associate a location with a physical entity is therefore an important step forward to further secure the living and working environments.

The present disclosure establishes proof of location based on the communication network forwarding the data. In the present disclosure trust is anchored in access points of the network used for routing the data from the device to the target service. Advantageously, to prevent situations in which data captured in a certain location associated with a given access point would be forwarded to another access point, hence forging the actual original location of the data, the access point shall be in communication with the device through a single hop communication.

For example, an existing operator-managed wireless network can be used which access points have fixed and known position in the real world. For example, a mobile device can connect to an access point of the wireless network through its wireless interface.

Alternatively, a completely parallel network of radio beacons can be used e.g. existing loT networks like The Things Network (https://www.thethingsnetwork.org) or the decentralized version of it, called the Helium network (https://www.helium.com). In the latter case, since the radio beacons powering the network are owned by untrusted parties (end-users), an additional system of beacons checking each other's approximate location is required to establish trust in the location they report in the above-defined certificates.

The disclosure may also apply to private-wireless deployments.

It also applies to fixed access networks. For the fixed access network, the access point could be the customer-premises equipment (CPE) e.g. a modem in the home of the customer, or a digital subscriber line access multiplexer (DSLAM) in the operator network. The CPE is typically under control of the operator (and owned by the operator), so it can be provisioned with the necessary key to sign certificates.

For example, the disclosed embodiments are advantageous for devices, such as high-end digital cameras and loT devices. Indeed, such devices may come factory equipped with a unique private-public keypair to identify the device and to sign captured data with their private key, so that tampering with the captured data cannot be done unnoticed. But such devices are typically used to capture data pertaining to a specific location (picture, video, sensor data). Without proof of the actual location (and optionally the actual time) at which the data were produced, it remains difficult to trust the authenticity of data.

Shipping services is another use case where the disclosed embodiments are advantageous. For example, a shipping company may be required to report temperature readings of containers containing fresh produce, while in transit from producer to consumer. Without a unique identification of the sensor device emitting the readings, any sensor could be used to report temperature readings. Even if the sensor would sign the readings, that sensor might be held in a location detached from the actual shipping container. This can be resolved with the present disclosure, where additional location-based information are included in the readings.

The same would apply to environmental sensors reporting air-quality measurements. Proof that the measurements took place at the exact location in which the sensors are claimed to be installed increased trust in the authenticity of the data.

Bridging digital and physical worlds is also needed in use cases where physical goods are being traded over a decentralized platform. Since the goods typically need to be shipped from seller to buyer, the trading platform would benefit from an unforgeable guarantee that the seller has shipped the goods and that the buyer has received them. For example, equipping goods with NFC tags as well as using certified NFC readers with communication means and requiring certificates as disclosed herein to be included in messages from the NFC reader to the platform, can assert that goods have been seen in certain geographic areas.

In another example, an unforgeable proof of location can also be used to implement physical security measures such as access-control at a physical site. For example, it may be used to restrict access to company-sensitive data to devices that are within the confines of that company (for example in a campus-wireless setting). In another example, access to bank accounts could be additionally protected by only allowing high-value transactions to be performed from the home location of the user: without the keys to the house, no-one would be able to produce the right proof-of-location for the transaction. In yet another example, fake news may be detected by verifying whether the data were produced at the claimed location and/or time.

GPS could help in establishing the location, but GPS signals can be forged, e.g. by jamming or disturbing radio signals around the GPS device or producing fake GPS signals at a higher signal/noise ratio then the real GPS signals.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1. is a flow chart of a method as disclosed herein implemented at an access point.
FIG.2 is a flow chart of a method as disclosed herein implemented at a device.
FIG.3 is a flow chart of a method as disclosed herein implemented at a target service.
FiG.4 is a schematic representation of an example of a message sent by a device to a target service according to the method disclosed herein.
FIG.5 is a schematic representation of an example of a certificate generated by an access point of a network according to a method as disclosed herein.
FIG.6 is a block diagram of a system comprising a device, an access point, a target service, a second secure data repository and a location service implementing methods as disclosed herein.
FIG.7 is a schematic block representation of an apparatus for implementing a device, or an access point, or a target service, or a location service as disclosed herein.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

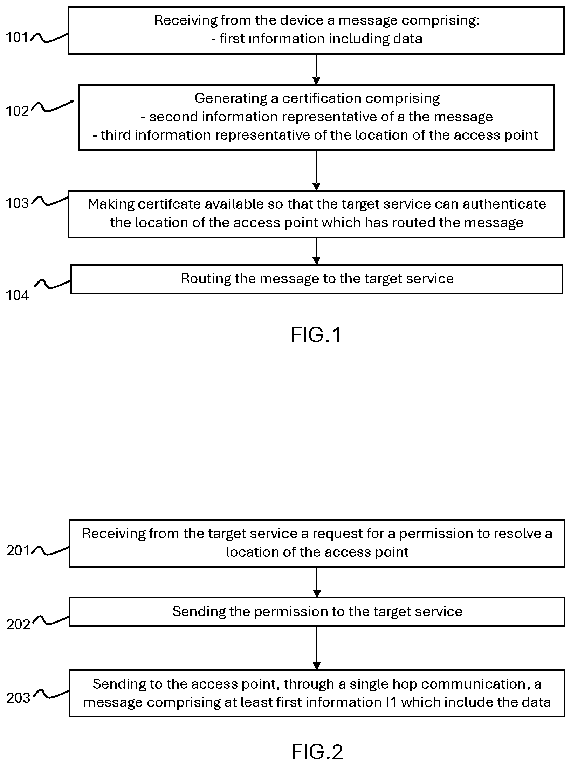

The disclosure relates to providing trust in data sent by a device through a network to a target service. The network typically comprises access points and the device can access to the network via one of the access points of the network through a single hop communication. FIG.1 illustrates a method as disclosed herein implemented at the access point. As illustrated in FIG.1, the method comprises:
- at step 101, receiving from the device, through a single hop communication, a message comprising at least first information which include the data,
- at step 102, generating a certificate comprising at least second information representative of the message and third information representative of a location of the access point,
- at step 103, making the certificate available in such a way that the target service receiving the message can authenticate the location of the access point which has routed the message, based on the certificate, and
- at step 104, route the message to the target service.

The message can be unencrypted or encrypted. For example, it can be sent over an encrypted https session, using a TLS protocol. The content of the message and the content of the certificate vary depending on the embodiment which will be explained in detail in the following of the description.

When the message is unencrypted, the certificate is made available, at step 104, by attaching the certificate to the message being sent to the target service, or by returning the certificate to the device, for the device to make it available to the target service, or by storing the certificate in a first secure data repository.

In an embodiment, the third information in the certificate comprises an access point identifier uniquely representing the location of the access point. Optionally, it also comprises a location offset with respect to the access point location e.g. obtained through triangulation of the device.

For example, devices will see their messages being augmented with the certificate generated by the access point so that the target service can be assured of the actual location from which that device was transmitting the message. Since the access point generating the certificate is not under control of the owner of the device, the owner cannot willfully cheat the system. Absence of certificates, as well as failure to authenticate the location of the access point which has routed the message, will cause messages to be discarded by the target service.

When the message is encrypted, the certificate is preferably stored in a first secure data repository such as a blockchain.

FIG.2 illustrates a method as disclosed herein implemented at the device. As illustrated in FIG.2, the method comprises:
- at 201, receiving from the target service a request for a permission to resolve a location of the access point,
- at 202, sending the permission to the target service,
- at 203, sending to the access point of the network, through a single hop communication, a message comprising at least first information which include the data.

For example, the permission is requested once at the time when the device is onboarded by the target service.

Advantageously, to address the privacy aspects of sharing location details, the user of the device may decide at which level of granularity the location of the access point shall be disclosed. In an embodiment, the permission sent to the target service comprises an indication of a granularity at which resolution is permitted.

In an embodiment, the device has a cryptographic private-public keypair and it signs the permission with its private key.

When the message sent by the device at step 203 is unencrypted, the message further comprises, in addition to the first information, the device signature over the first information with its private key, and the public key of the device. The device signature over the first information is then included in the second information which is part of the certificate generated by the access point. It is eventually used by the target service upon reception of a message, to check that the certificate made available by the access point relates indeed to the received message (as will be further described below, this check is achieved by comparing the device signature over the first information contained in the received message with the second information contained in the certificate).

As previously mentioned with reference to FIG.1, at step 104, the certificate can be made available by the access point by returning the certificate to the device. For example, the access point can send a receipt to the device comprising the certificate and a hash of the message. Upon reception, the device can either systematically transfer the receipt to the target service or wait for the target service to request it.

In a variant, a zero-knowledge proof mechanism is used. In this case, the third information contained in the certificate generated by the access point constitutes a verifiable credential (the access point being a credential issuer). Upon reception of the certificate, the device generates a verifiable presentation comprising a zero-knowledge proof that the access point is located within a given area depending on the granularity of the permission (the device being a credential holder). The device updates the certificate generated by the access point with the verifiable presentation and sends it to the target service. This allows the target service to authenticate the location of the access point which has routed the message without disclosing anything about the actual location.

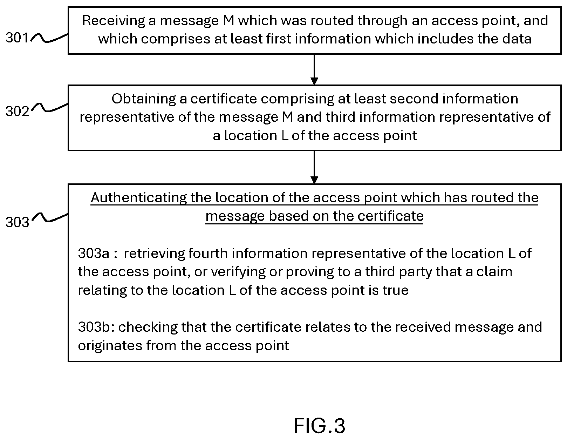

FIG.3 illustrates a method as disclosed herein implemented at the target service. As illustrated in FIG.3, the method comprises:
- at 301, receiving a message which was routed through an access point of the network, and which comprises at least first information which includes the data,
- at 302, obtaining a certificate comprising at least second information representative of the message and third information representative of a location of the access point,
- at 303, authenticating the location of the access point which has routed the message based on the certificate.

In an embodiment, authenticating the location of the access point comprises:
- at 303a, retrieving fourth information representative of the location of the access point, or verifying or proving to a third party that a claim relating to the location of the access point is true, and
- at 303b, checking that the certificate relates to the received message and originates from the access point.

In an embodiment, the fourth information may be the third information. Alternatively, retrieving the fourth information may comprise sending a location resolution request comprising at least the third information to a location service configured to resolve the location of the access point with the granularity which was permitted by the device at step 202. In this case, the fourth information is the location at the permitted granularity.

When third information is encrypted by the access point with the public key of the location service, the location service uses its private key to decrypt the third information.

For example, the permission sent at step 202 is signed with the private key of the device. The target device stores the signed permission upon reception. Location resolution requests sent to the location service include the certificate and the signed permission. Advantageously the permission comprises a given level of granularity at which the location shall be resolved. This shows to the location service that the target service has obtained permission from the device to get the location of the access point at the given granularity. The location service verifies the certificate, retrieves the third information from the certificate, and runs resolution means to obtain the location at the given granularity from the third information.

For example, the third information is an abstract access point identifier uniquely representing the location of the access point. The location service keeps a mapping of access point identifiers and exact geo-coordinates of the access points. From the access point identifier, it retrieves the exact geo-coordinates of the access point and resolves it to the permitted granularity, such as exact location, area, region, country, continent, etc.

For the example, the indication of a granularity contained in the permission includes:
- a granularity value (e.g. one of a pre-defined set of granularities, such as "exact location", "100-meter", "1-kilometer", "city", "region", "country", ...),
- the public key of the device signing the permission,
- optionally an expiration timestamp denoting until when the permission is valid, and
- the signature over: the granularity value, the public key of the device and the expiration timestamp.

In an embodiment, a second secure data repository is used to store the public key of the participating access points along with a link to a location service capable of resolving locations based on the access point unique identifier. For example, the second secure data repository is a blockchain. Having its public key stored in the second secure data repository means that the access point is authorized to sign certificates with its corresponding private key. For example, the second secure data repository offers a lookup API through which anyone can verify whether a certain public key is registered, and can retrieve the URL of the corresponding location service for mapping the access point identifier to its physical location.

For example, the first and the second data repository can be one and the same blockchain.

Step 303 (authenticating the location of the access point which has routed the message) can be implemented in various ways as will be described below.

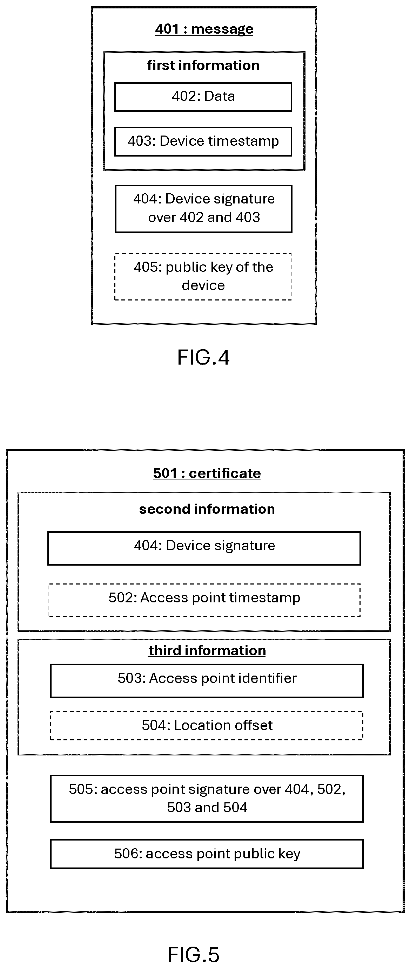

In a first embodiment, the message is sent unencrypted by the device to the target service. A schematic representation of such a message (referenced 401) is provided in FIG.4. It comprises:
- the first information comprising the data 402 and optionally a timestamp 403 indicative of the time when the data have been acquired,
- a device signature 404 over the first information 402 and 403 signed with a private key of a cryptographic private-public keypair of the device, and optionally the public key 405 of the cryptographic private-public keypair of the device (alternatively, the public key of the device could be retrieved from some public PKI infrastructure).

The unencrypted message 401 is received by the access point which generates the certificate. A schematic representation of such a certificate (referenced 501) is provided in FIG.5. It comprises:
- the second information comprising the device signature over the first information (404), and optionally a timestamp 502 indicative of the time when the certificate was issued by the access point,
- the third information (optionally encrypted with the public key of a location service) comprising for example an access point identifier 503 and optionally a location offset 504 with respect to the access point location e.g. obtained through triangulation of the device,
- a signature 505 by the access point over the second and third information 404, 502, 503 and 504 signed with a private key of the cryptographic private-public keypair of the access point, and
- the public key 506 of a cryptographic private-public keypair of the access point.

In this first embodiment, step 303b comprises comparing the device signature over the first information contained in the received message with the second information of the certificate (to check that the certificate relates to the received message), and verifying the access point signature contained in the certificate (to check that the certificate originates from the access point).

In a second embodiment, the message is sent by the device to the target service over an encrypted session and the certificate is stored by the access point in the first secure data repository. The encrypted message is sent over the network in a plurality of packets each packet comprising a payload, a payload including a first and a second bit segments with a predefined relative position. For example, the first segments are constituted by the first N1 bits of the payloads and the second segment are constituted by the first N2 bits of the payloads where N2>N1 (which means that the N1 bits of the first segments are comprised within the N2 bits of the second segments). N1 and N2 are fixed and can be tuned. For example, N1 =10 and N2=512.

The access point needs to generate a commitment to the location and optionally to the time when packets pass the access point. This is done by hashing the second bit segments of one or more payloads and signing over the resulting hashes with a private key of the cryptographic private-public keypair of the access point. Sophisticated strategies can be used to accumulate signatures as well as hashes and reduce the amount of data obtained. For example, a Merkle-tree for accumulating hashes and/or BLS for accumulating signatures can be used, among other existing optimization and accumulation strategies.

The first bit segments are not hashed. They are appended to the access point signature over the hashes of the second bit segments to constitute the second information.

The target service receives the packets, but the application layer of the target service doesn't have access to the packet structure (it is much deeper in the protocol stack). Therefore, when the target service receives the encrypted message, it uses the first bit segments as prefixes to identify the second segments in the received encrypted message. In practice, upon finding a first bit segment in the encrypted message, the target device knows that it corresponds to the N1 first bits of the second bit segment. It knows the length of the second bit segment which is fixed (e.g. 512 bits). Therefore, it can retrieve the second bit segment from the received encrypted message without having the knowledge of the packet structure of the received encrypted message.

Once the second bit segments have been retrieved by the target service, they are hashed, and the access point signature is verified with the public key of the cryptographic private-public keypair of the access point based on the hashes of the retrieved second segments.

In this second embodiment, step 303 comprises: receiving the encrypted message, retrieving the certificate from a first secure data repository, identifying in the received encrypted message the one or more first segments contained in the second information, retrieving from the encrypted message the second segments associated with the identified first segments, hashing the retrieved second segments, and verifying the access point signature with the public key of the cryptographic private-public keypair of the access point based on the hashes of the retrieved second segments.

It is not necessary to select first and second bit segments at the access point for all payloads of the all packets of the encrypted m few tens of payloads. For example, a few tens of first and second bit segments can be used to generate the second information of the certificate.

In a third embodiment, the message is also sent by the device to the target service over an encrypted session. But the target device is configured to prove to a third party that a claim relating to the location of the access point is true, instead of authenticating the location of the access point which has routed the message. The certificate is stored in the first secure data repository and can be retrieved by the target service and by the third party.

In this third embodiment, the third party has access to the data retrieved from the received encrypted message, not to the received encrypted message. Therefore, step 303 comprises: receiving the encrypted message, retrieving the data from the encrypted message, retrieving the certificate from a first secure data repository, re-encrypting the retrieved data, identifying in the re-encrypted data the one or more first segments contained in the second information, retrieving from the re-encrypted data the second segments associated with the identified first segments, hashing the retrieved second segments, and generating and sending to the third party a zero-knowledge proof of a verification of the access point signature on the hashes of the second segments retrieved from the re-encrypted data, based on the data and the hashes of the second segments retrieved from the re-encrypted data.

Zero-knowledge proof systems are well known to produce a zero-knowledge proof in the form of an array of bytes which provides a mathematical proof of correct execution of statements. It is impossible to generate a proof when computing the statements differently (with tampered data or re-ordered execution). A zero-knowledge proof provides soundness and completeness of a statement.

In the third embodiment, the zero-knowledge proof is a mathematical proof about the following statement:
- there exists data that is re-encrypted with a secret session key (shared between the device and the target service), and
- the hash of a segment of the re-encrypted data was signed by a signature from the access point.

In this third embodiment, the target service sends to the third party the data, the zero-knowledge proof it has generated and the hashes of the retrieved second segments, so that the third party to verify the proof.

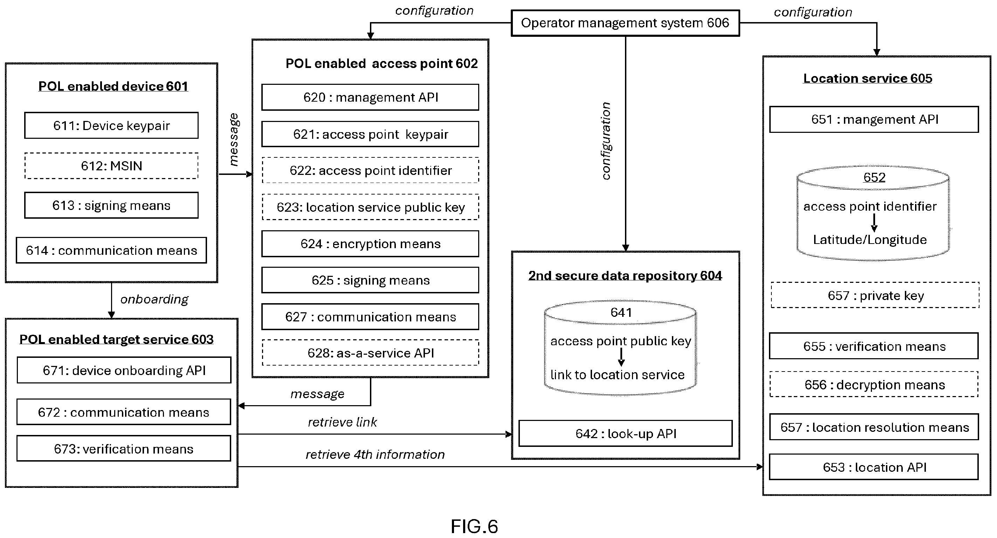

FIG.6 is a schematic representation of a system comprising a device 601, an access point 602, a target service 603, a second secure data repository 604, and a location service 605. Each of the elements in the system have means to execute a method as disclosed herein (referred to as POL protocol in FIG.6).

The device 601 comes factory-installed with a private-public keypair 611. It has signing means 613, e.g. with a SHA-256 or equivalent algorithm, and communication means 614 to send messages 615, including data, e.g. data corresponding to a sensor reading or camera footage, to the access point 602, according to a method as disclosed herein.

For example, the device 601 is a mobile phone factory-installed with a MSIN 612 attached to a SIM card or an e-SIM. In this example, the access point 602 is owned and managed by an operator. This is not limitative. In this example, the access point 602 has a management API 620 through which an operator management system 606 performs configuration operations. For example, it is configured via the operator management system 606 with a private-public keypair 621, a globally unique identifier 622 and the public key 623 of the location service 605. The access point 602 has encryption means 624 to encrypt the third information with the public key of the location service and signing means 625 to sign the second information and the encrypted third information. The access point 602 has also communication means 626 to receive and intercept messages sent by the device 601, send a receipt to the device and/or store the certificate in a remote fist secure data repository, and to forward the message to the target service, with or without the certificate attached (depending on the embodiment, the access point will either return message receipts including certificates to the device 601, or store the certificate in a first secure data repository, or attach the certificate to the message en-route to its destination). Optionally, the access point may also have an as-a-service API 627 for a target service to ask for the generation of a certificate.

The second secure data repository 604 which is publicly available and accessible, such as (but not limited to) a blockchain, is configured to store, for each of the access points participating in the system, a mapping from the access point public key and a link (e.g. an URL) pointing to a location service 605. The location service 605 can resolve a location based on an access point unique identifier. The second secure data repository 604 has a lookup API 641 through which anyone can verify whether a certain access point public key is registered and retrieve the link of the corresponding location service for mapping access point identifiers to physical locations.

In this example, the location services 605 is owned and configured by the trusted operator via a management API 651. It includes a database 652 storing mappings from an access point unique identifier to the access point physical location as a geo-coordinate (latitude/longitude). The location service further comprises a location API 653 that can answer location resolution requests 654 sent by the target service 603. The location service 605 has means 655 to verify the certificates, means 656 to decrypt the encrypted location information (third information) with its private key 657, and means 658 to map the decrypted exact geo-coordinates to various granularities, such as exact, area, region, country, continent, etc.

The Target Service 603 implements a use case (for which many examples were given in the above summary section) that requires knowledge of the location of devices 601 which are communicating with the target service 603, at a given granularity. The target service 603 has a device-onboarding service API 671 for device owners to register their device 601 as a device that would like to participate in the proof of location service being offered. The onboarding means 671 enable storing permissions (preferably signed by the device) received from the device 601. Further, the target service has communication means 672 to send and receive, and verification means 673 to verify the certificate. Upon reception of a certificate, it looks up the access point unique identifier (known from the certificate) in the second secure data store 604 through the look-up API 642 and retrieve the link to the location resolution service 605. Then it queries the location service 605 through the location API 653 to obtain the resolution of the location of the access point at the given granularity (the fourth information). If the verification is successful, the target service can conclude that the retrieved location (fourth information) is indeed the location of the access point which has routed the received message.

In FIG.4, 5 and 6, dashed lines are used to indicate blocks that may not be used in certain embodiments. This is not exhaustive nor limitative.

Example of use cases will now be described. A first example relates to environmental sensing. For example, a government agency wants to monitor air quality in a certain city using CO2 sensors 601 deployed across the city. For this, a new service 603 is launched. First, each proof-of-location-enabled sensor 601 is onboarded with the target service 603 requesting for e.g. 100m location granularity. Then, they are physically installed at strategic locations around the city. During the onboarding, the exact physical location of where the devices are deployed is entered in the location service 605. Each sensor 601 regularly reports CO2 measurements to the target service 603, using a public (or private) wireless network deployed in the city. The access point 602 is a wireless network radio equipment in that network. It is configured with means for generating the certificates. Whenever the access point 602 receives a message from the sensor 601, it generates and attaches a certificate to the message (or it returns the certificate to the sensor device, or store it in a first secure data repository). The target service 603 makes sure it receives regular sensor readings from each participating sensor device 601 and checks the embedded certificate contained in each message for validity. It checks whether the certificate is signed by an authorized access point by looking up the access point public key contained in the certificate in the second secure data repository 604. And it requests the location service 605 to resolve the access point identifier embedded in the certificate to a 100m-accurate location. If the pre-configured location deviates more than 100m from the resolved location, the target service detects that the sensor was tampered with (e.g. moved to a different location, far away from a polluting coal factory).

A second example relates to the shipping of physical goods. For example, a company offers e-commerce as a service. It allows e-commerce shops and shipping companies to sign-up for the service, allowing them to offer a pay-when-you-receive option. This option protects customers from paying up-front for goods offered over the internet without guaranty of receiving the goods. At purchase time, a smart contract is created, in which funds of the customer (to the amount of the purchase price) are first locked in an escrow account. Only when the seller can prove that he shipped and delivered the goods at the front door of the customer, will the locked funds automatically be released to the seller. If the seller cannot provide such a proof, the buyer is fully refunded. To enable this scenario, the shipping company must first onboard mobile scanner devices 601 supporting the method disclosed herein. When a purchase order comes in, the buyer sends money to a smart contract. The seller hands over the purchased goods to the shipping company, which scans the goods with the scanner device 601. The scanner device 601 sends the scan result (e.g. a bar code, possibly with a picture of the goods, a serial number, ...) to the target service 603. This message is first received by a first access point, configured according to the present disclosure, which attaches a certificate to the message. The target service 603 receives the message, checks it for validity and records the message on it's website. When the package arrives at its intended destination, the shipping company scans the goods again, in which case a second access point near the shipping destination receives the message containing the scan, attaches a certificate and forwards the message to the target service 603. If the location associated with that second message is sufficiently near the shipping destination, the goods are considered as successfully delivered and a proof of delivery message is sent to the smart contract. The buyer's funds are sent to the seller's wallet. In this use case, it is assumed the shipping company can be trusted by both the buyer and the seller.

A third example relates to a campus data protection. For example, a company can deploy a private wireless network, using e.g. a 5G campus-wireless solution. The company has strict access control deployed around the site, requiring employees to enter through a gate with their corporate badge and e.g. a biometric scanner. The company allows machines to be operated via mobile devices, e.g. through an application installed on the employees' phone. However, it only allows the machines to be operated from within the company bounds. In this example, the machines are the target service 603 and the mobile devices are the devices 601. Commands sent from the mobile device 601 to control machines 603 are first intercepted by the campus-wireless access point 602, and will only be accepted by the machines 603, if a valid certificate is attached to the command message sent by the mobile devices 601. When an employee exits the company bounds with that mobile phone and tries to control the machine from outside the campus-wireless network, a valid certificate can no longer be associated with the commands which will hence be discarded.

A fourth example relates to the detection of fake news. In this case the target service 603 can be a social media platform and the devices 601 can be camera devices configured to implement a method as disclosed herein. For example, the devices 601 are smart phones with a specific application dedicated to the implementation of the method installed. For example, fake news can be generated by generative Al, claiming to have caught a celebrity in some controversial situation, e.g. on video. News agencies can implement a policy requiring proof-of-location to be attached to footage. The Al-generated fake footage would not be signed with the private key of an access point which location is compatible with the content of the footage and therefore wouldn't be published by the news agencies.

In another example related to fake news, a third party e.g. a police officer can ask to verify whether a footage (e.g. for videos posted on social media) was uploaded from a particular location. In this case, the target service 603 is the social media and the objective is to provide a proof that the footage is valid. This can be achieved by applying the third embodiment described above. For example, the social media creates a zero-knowledge proof to convince the third party that the message received by the social media has been routed through a base station in the area compatible with the data contained in the message. The social media has access to the encrypted message, the encryption key used for the session (e.g. TLS protocol) and therefore it can retrieve the data and create a zero-knowledge-proof that links the data with the hashes created by the access point. The location (and optionally the time) cannot be modified in this process because it is stored in the first secure data repository. The encrypted message cannot be changed by the social media (because of the hash by the access point). The key cannot be changed either because that would fail the decryption process. The third party has access to the data and can be convinced it was signed by an access point at a particular location. The third party doesn't need access to the encrypted message nor the encryption key.

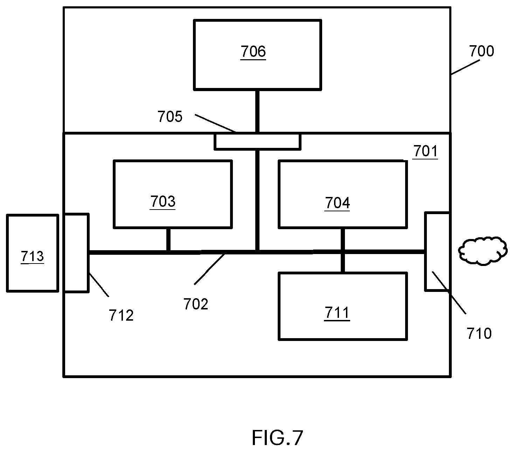

FIG.7 depicts a high-level block diagram of an apparatus 700 suitable for implementing various aspects of the disclosure. For example, a device, an access point, a target service, a location service as disclosed above can be implemented in the form of apparatus 1000. Although illustrated in a single block, in other embodiments the apparatus 700 can also be implemented using parallel and/or distributed architectures, for example it can be distributed on different hardware platforms and/or different locations.

According to an exemplary embodiment, depicted in FIG.7 apparatus 700 comprises a printed circuit board 701 on which a communication bus 702 connects a processor 703 (e.g., a central processing unit "CPU"), a random access memory 704, a storage medium 711, possibly an interface 705 for connecting one or more input/output devices 706 such as a display, a mouse or trackpad, a keyboard, etc... a wireless network interface 710 and/or a wired network interface 712. Depending on the use case, the apparatus may implement only part of the above. Certain modules of FIG.7 may be internal or connected externally, in which case they do not necessarily form integral part of the apparatus itself. E.g. a display may be connected to the apparatus only under specific circumstances, or the apparatus may be controlled through another device with a display, i.e. no specific display and interface 705 are required for such an apparatus. Memory 711 contains software code which, when executed by processor 703, causes the apparatus to perform a methods described herein. In an exemplary embodiment, a detachable storage medium 713 such as a USB stick may also be connected. For example, the detachable storage medium 713 can hold the software code to be uploaded to memory 711.

The processor 703 may be any type of processor such as a general-purpose central processing unit ("CPU") or a dedicated microprocessor such as an embedded microcontroller or a digital signal processor ("DSP").

In addition, apparatus 700 may also include other components typically found in computing systems, such as an operating system, queue managers, device drivers, or one or more network protocols that are stored in memory 711 and executed by the processor 703.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A computer-implemented method of providing trust in data sent by a device through a network to a target service, the network comprising at least one access point, the method comprising at the access point:
- receiving from the device, through a single hop communication, a message comprising at least first information which include the data,
- generating a certificate comprising at least second information representative of the message and third information representative of a location of the access point,
- making the certificate available in such a way that the target service receiving the message can authenticate the location of the access point which has routed the message, based on the certificate, and
- routing the message to the target service.

2. The computer-implemented method as claimed in claim 1, wherein the message is unencrypted and further comprises a device signature over the first information signed with a private key of a cryptographic private-public keypair of the device, and the second information comprises the device signature over the first information.

3. The computer-implemented method as claimed in claim 2, wherein the certificate is made available by attaching the certificate to the message being sent to the target service, or by returning the certificate to the device for the device to make it available to the target service, or by storing the certificate in a first secure data repository.

4. The computer-implemented method as claimed in claim 1, wherein the message is encrypted and sent over the network in a plurality of packets each packet comprising a payload, the method further comprising:
- selecting a first and a second bit segments in one or more payloads, wherein the first and second bit segments of the payloads have a predefined relative position,
- hashing the second bit segments to obtain hashes, and applying an access point signature over the hashes signed with a private key of the cryptographic private-public keypair of the access point,
- storing the certificate in a first secure data repository, the second information of the certificate comprising the first bit segments and the signed hashes.

5. A computer-implemented method of providing trust in data sent by a device through a network to a target service, the network comprising at least one access point, the method comprising at the device:
- receiving from the target service a request for a permission to resolve a location of the access point,
- sending the permission to the target service,
- sending to the access point of the network, through a single hop communication, a message comprising at least first information which include the data.

6. The computer-implemented method as claimed in claim 5, wherein the permission comprises an indication of a granularity at which resolution is permitted.

7. The computer-implemented method as claimed in any of claims 5 or 6, wherein the message is sent unencrypted and further comprises a device signature over the first information signed with a private key of a cryptographic private-public keypair of the device, and the public key of the cryptographic private-public keypair of the device.

8. The computer-implemented method as claimed in claim 7 further comprising:
- receiving from the access point a certificate comprising at least second information which include the device signature over the first information and third information representative of a location of the access point, and
- sending the certificate to the target service to enable authentication by the target service of the location of the access point which has routed the message.

9. The computer-implemented method as claimed in claim 7 further comprising:
- receiving from the access point a certificate comprising at least second information which include the device signature over the first information, and third information representative of a location of the access point,
- generating based on the certificate a verifiable presentation comprising a zero-knowledge proof relating to the location of the access point,
- updating the certificate with the verifiable presentation, and
- sending the updated certificate to the target service to enable authentication by the target service of the location of the access point which has routed the message.

10. A computer-implemented method of providing trust in data sent by a device through a network to a target service, the method comprising at the target service:
- receiving a message which was routed through an access point of the network, and which comprises at least first information which includes the data,
- obtaining a certificate comprising at least second information representative of the message and third information representative of a location of the access point,
- authenticating the location of the access point which has routed the message based on the certificate.

11. The computer-implemented method as claimed in claim 10, wherein authenticating the location of the access point comprises:
- retrieving fourth information representative of the location of the access point, or verifying or proving to a third party that a claim relating to the location of the access point is true, and
- checking that the certificate relates to the received message and originates from the access point.

12. The computer-implemented method as claimed in claim 11, wherein retrieving the fourth information comprises:
- sending a location resolution request comprising at least the third information to a location service configured to resolve the location of the access point, and
- receiving the fourth information in response.

13. The computer-implemented method as claimed in claim 12, further comprising sending to the device a request for a permission to resolve the location of the access point, the permission comprising an indication of a granularity at which resolution is permitted, wherein the location resolution request comprises the granularity, and the fourth information is function of the granularity.

14. The computer-implemented method as claimed in any of claim 12 or 13, wherein the third information is encrypted with a public key of the location service.

15. An apparatus comprising means to perform a method as claimed in any of claims 1 to 14.
